(19) Europäisches Patentamt / European Patent Office / Office européen des brevets

(11) **EP 4 576 547 A1**

(12) **EUROPÄISCHE PATENTANMELDUNG**

(43) Veröffentlichungstag:
**25.06.2025   Patentblatt 2025/26**

(21) Anmeldenummer: **23218588.4**

(22) Anmeldetag: **20.12.2023**

(51) Internationale Patentklassifikation (IPC):
**H02M 7/483** (2007.01)    **H02M 1/42** (2007.01)
**H02M 1/00** (2006.01)    **H02M 1/32** (2007.01)
**H05B 7/148** (2006.01)    **F27B 3/08** (2006.01)

(52) Gemeinsame Patentklassifikation (CPC):
**H02M 7/483; F27B 3/085; H02M 1/0012;**
**H02M 1/0019; H02M 1/32; H02M 1/4216;**
**H05B 7/148**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Primetals Technologies Germany GmbH**
**91058 Erlangen (DE)**

(72) Erfinder:
• **Dinkel, Daniel**
  **91058 Erlangen (DE)**
• **Weinzierl, Klaus**
  **90480 Nürnberg (DE)**

(74) Vertreter: **Metals@Linz**
**Primetals Technologies Austria GmbH**
**Intellectual Property Upstream IP UP**
**Turmstraße 44**
**4031 Linz (AT)**

(54) **OPTIMIERTE REGELUNG EINES LICHTBOGENOFENS MITTELS EINES MULTILEVELKONVERTERS**

(57)     Elektroden (1) eines Drehstrom-Lichtbogenofens (2) werden von einem Multilevelkonverter (4) über einen Ofentransformator (3) mit elektrischer Energie versorgt. Einer Steuereinrichtung (15) des Multilevelkonverters (4) werden ausgangsseitig des Multilevelkonverters (4) fließende ausgangsseitige Phasenströme (I1, I2, I3) bekannt. Die Steuereinrichtung (15) ermittelt für den jeweils aktuellen Zeitpunkt erste ausgangsseitige Phasenspannungsanteile (U11*, U12*, U13*), so dass eine durch die ersten ausgangsseitige Phasenspannungsanteile (U11*, U12*, U13*) bestimmte komplexe erste ausgangsseitige Spannung (U1*) in der komplexen Ebene parallel zu einem durch die ausgangsseitigen Phasenströme (I1, I2, I3) bestimmten komplexen ausgangsseitigen Strom (I) orientiert ist. Die Steuereinrichtung (15) ermittelt zweite ausgangsseitige Phasenspannungsanteile (U21*, U22*, U23*), so dass eine durch die zweiten ausgangsseitigen Phasenspannungsanteile (U21*, U22*, U23*) bestimmte komplexe zweite ausgangsseitige Spannung (U2*) in der komplexen Ebene orthogonal zu der komplexen ersten ausgangsseitigen Spannung (U1*) orientiert ist. Die Steuereinrichtung (15) steuert den Multilevelkonverter (4) derart an, dass der Multilevelkonverter (4) mit den Summen der ersten und zweiten ausgangsseitigen Phasenspannungsanteile (U11*, U12*, U13*, U21*, U22*, U23*) korrespondierende ausgangsseitige Phasenspannungen bereitstellt. Die Steuereinrichtung (15) führt die genannten Schritte mit einer Zykluszeit (TZ) immer wieder aus.

FIG 1

**Beschreibung**

Gebiet der Technik

Die vorliegende Erfindung geht aus von einem Steuerverfahren für einen Multilevelkonverter, der Elektroden eines Drehstrom-Lichtbogenofens über einen Ofentransformator mit elektrischer Energie versorgt, wobei einer Steuereinrichtung des Multilevelkonverters mit einer Zykluszeit immer wieder ausgangsseitig des Multilevelkonverters fließende ausgangsseitige Phasenströme bekannt werden.

Die vorliegende Erfindung geht weiterhin aus von einem Steuerprogramm für eine Steuereinrichtung zum Steuern eines Multilevelkonverters, der Elektroden eines Drehstrom-Lichtbogenofens über einen Ofentransformator mit elektrischer Energie versorgt, wobei das Steuerprogramm Maschinencode umfasst, der von der Steuereinrichtung unmittelbar abarbeitbar ist, wobei die Abarbeitung des Maschinencodes durch die Steuereinrichtung bewirkt, dass die Steuereinrichtung ein derartiges Steuerverfahren ausführt.

Die vorliegende Erfindung geht weiterhin aus von einer Steuereinrichtung zum Steuern eines Multilevelkonverters, der Elektroden eines Drehstrom-Lichtbogenofens über einen Ofentransformator mit elektrischer Energie versorgt, wobei die Steuereinrichtung mit einem derartigen Steuerprogramm programmiert ist, so dass die Steuereinrichtung im Betrieb ein derartiges Steuerverfahren ausführt.

Die vorliegende Erfindung geht weiterhin aus von einem Multilevelkonverter, der Elektroden eines Drehstrom-Lichtbogenofens über einen Ofentransformator mit elektrischer Energie versorgt, wobei der Multilevelkonverter von einer derartigen Steuereinrichtung gesteuert wird.

Stand der Technik

Die oben genannten Gegenstände sind beispielsweise aus der EP 2 329 684 B1 bekannt.

Zusammenfassung der Erfindung

In einem Elektrostahlwerk wird Schrott mittels eines Lichtbogenofens geschmolzen. Dazu werden in der Regel drei Elektroden in einen mit Schrott gefüllten Behälter getaucht und sodann zwischen dem Schrott und den Elektroden Lichtbögen generiert, so dass der Schrott aufgeheizt und geschmolzen wird.

Die an die Elektroden angelegten Spannungen liegen typischerweise im Bereich von mehreren 100 V bis etwas über 1 kV, manchmal bis zu 2 kV. Die Leistung eines industriellen Lichtbogenofens liegt oftmals zwischen 50 MW und 300 MW.

Durch den ständig flackernden Lichtbogen kommt es zu Spannungsschwankungen und - wenn keine Gegenmaßnahmen ergriffen werden - zu erheblichen Netzrückwirkungen. Historisch ist es bekannt, dem Lichtbogenofen Kompensatoren parallel zu schalten, beispielsweise einen sogenannten SVC (static VAR compensator) oder einen sogenannten STATCOM (static compensator) oder passive Filter. Derartige Kompensatoren sind groß, schwer und teuer. Weiterhin erzeugen sie Verlustleistung und beeinflussen auch andere an das Versorgungsnetz angeschlossene Einheiten.

Aus der EP 2 329 684 B1 ist bekannt, den Lichtbogenofen über einen Multilevelkonverter zu speisen, der eingangsseitig des Ofentransformators angeordnet ist. Mit einem derartigen Umrichter ist es möglich, zusätzlich zu einer genauen Einstellung der Blindleistung auf der Eingangsseite auch die vom Elektrolichtbogenofen aufgenommene Wirkleistung zu regeln. In der genannten EP-Schrift ist ausgeführt, dass über die symmetrische Belastung der Phasen des Versorgungsnetzes mit Wirkleistung hinausgehende Rückwirkungen der Phasen des Lichtbogenofens auf das Versorgungsnetz minimiert werden. Die genaue Art und Weise der Ansteuerung des Multilevelkonverters ist der genannten EP-Schrift nicht zu entnehmen.

Die Aufgabe der vorliegenden Erfindung besteht darin, derartige Möglichkeiten anzugeben.

Die Aufgabe wird durch ein Steuerverfahren mit den Merkmalen des Anspruchs 1 gelöst. Vorteilhafte Ausgestaltungen des Steuerverfahrens sind Gegenstand der abhängigen Ansprüche 2 bis 11.

Erfindungsgemäß wird ein Steuerverfahren der eingangs genannten Art geschaffen, bei dem von der Steuereinrichtung des Multilevelkonverters zusätzlich zu dem bereits erwähnten Entgegennehmen der Messwerte mit der Zykluszeit immer wieder folgende Schritte ausgeführt werden:

- die Steuereinrichtung ermittelt für den jeweils aktuellen Zeitpunkt erste ausgangsseitige Phasenspannungsanteile, so dass eine durch die ersten ausgangsseitigen Phasenspannungsanteile bestimmte komplexe erste ausgangsseitige Spannung in der komplexen Ebene parallel zu einem durch die ausgangsseitigen Phasenströme bestimmten komplexen ausgangsseitigen Strom orientiert ist,
- die Steuereinrichtung ermittelt zweite ausgangsseitige Phasenspannungsanteile, so dass eine durch die zweiten ausgangsseitigen Phasenspannungsanteile bestimmte komplexe zweite ausgangsseitige Spannung in der komplexen Ebene orthogonal zu der komplexen ersten ausgangsseitigen Spannung orientiert ist,
- die Steuereinrichtung steuert den Multilevelkonverter derart an, dass der Multilevelkonverter mit den Summen der ersten und zweiten ausgangsseitigen Phasenspannungsanteile korrespondierende ausgangsseitige Phasenspannungen bereitstellt.

Die Ansteuerung des Multilevelkonverters, so dass er ausgangsseitig vorgegebene Phasenspannungen bereitstellt, ist als solche ohne weiteres möglich. Die Möglichkeiten zur entsprechenden Ansteuerung sind dem Fachmann bekannt. Entscheidend ist vorliegend die Ermittlung der ausgangsseitigen Phasenspannungen.

Durch die ersten ausgangsseitigen Phasenspannungsanteile wird die momentane Wirkleistung eingestellt, die dem Ofentransformator von dem Multilevelkonverter zugeführt wird. Durch die zweiten ausgangsseitigen Phasenspannungsanteile wird eingestellt, wie schnell der momentane Arbeitspunkt des Lichtbogenofens, wie er durch die ausgangsseitigen Phasenströme und die ersten ausgangsseitigen Phasenspannungsanteile bestimmt ist, geändert wird. Aufgrund der voneinander unabhängigen Ermittlung der beiden Phasenspannungsanteile für jede Phase wird eine völlig flexible Steuerung des Multilevelkonverters erreicht, die zuvor nicht erreichbar war.

Die ersten und zweiten ausgangsseitigen Phasenspannungsanteile werden in jedem Zyklus neu ermittelt. Es ist daher eine Regelung des Lichtbogenofens möglich, die Störungen sehr schnell - binnen 1 ms und weniger - ausregeln kann.

Man könnte die Summe des Produkts der zweiten ausgangsseitigen Phasenspannungsanteile mit den ausgangsseitigen Phasenströmen als momentane Blindleistung bezeichnen. Der Begriff ist jedoch unzutreffend und sogar irreführend, da die Blindleistung ebenso wie die Wirkleistung nur für einen Betrieb mit einer festen Frequenz und nur für ganzzahlige Vielfache der halben Periode (Periode = Kehrwert der Frequenz) jeweils einen sinnvollen Wert ergibt. Bei der vorliegenden Erfindung handelt es sich bei der Summe des Produkts der zweiten ausgangsseitigen Phasenspannungsanteile mit den ausgangsseitigen Phasenströmen ebenso wie bei der momentanen Wirkleistung um einen Momentanwert, der nur auf Basis von Momentanwerten des jeweiligen Zyklus berechnet wird und nur für den jeweiligen Zyklus gültig ist. Auch muss die Ermittlung der ersten und zweiten ausgangsseitigen Phasenspannungsanteile nicht einmal vom Ansatz her eine periodische Ansteuerung des Multilevelkonverters bewirken. Es ist zwar möglich, dass sich dieses Ergebnis einstellt, es ist jedoch nicht zwingend erforderlich.

Die beiden Kriterien zum Ermitteln der ersten und zweiten ausgangsseitigen Phasenspannungsanteile können nach Bedarf miteinander verknüpft oder voneinander unabhängig sein. So ist es möglich, dass die Steuereinrichtung die zweiten ausgangsseitigen Phasenspannungsanteile unter Berücksichtigung zwar der ausgangsseitigen Phasenströme, aber ohne Berücksichtigung der ersten ausgangsseitigen Phasenspannungsanteile ermittelt. Beispielsweise können der Steuereinrichtung Maximalwerte für die ausgangsseitigen Phasenströme bekannt sein. In diesem Fall kann die Steuereinrichtung die zweiten ausgangsseitigen Phasenspannungsanteile unter Berücksichtigung der Abstände der ausgangsseitigen Phasenströme von ihren Maximalwerten ermitteln. Noch besser ist es, wenn der Steuereinrichtung in der komplexen Ebene ein Stromgebiet bekannt ist, innerhalb dessen der komplexe ausgangsseitige Strom liegen darf, und die Steuereinrichtung die zweiten ausgangsseitigen Phasenspannungsanteile unter Berücksichtigung des Abstands des komplexen ausgangsseitigen Stroms von den Grenzen des Stromgebietes ermittelt. Durch die Definition des Stromgebietes ist eine Berücksichtigung des Umstands möglich, dass der komplexe ausgangsseitige Strom auch eine minimale Länge haben muss, damit eine sinnvolle Aufteilung in eine erste parallele und eine zweite dazu senkrechte ausgangsseitige komplexe Spannung überhaupt stabil ist. Zudem sind die Limitierungen oftmals zeitlich nicht konstant, sondern basieren sehr spezifisch auf der genauen Auslegung und dem momentanen Betriebszustand des Multilevelkonverters. Die Definition des Stromgebietes kann also auch zeitlich variieren.

Ebenso ist es auch möglich, dass die Steuereinrichtung die zweiten ausgangsseitigen Phasenspannungsanteile zwar unter Berücksichtigung der ersten ausgangsseitigen Phasenspannungsanteile, aber ohne Berücksichtigung der ausgangsseitigen Phasenströme ermittelt. Beispielsweise können der Steuereinrichtung Maximalwerte für die ausgangsseitigen Phasenspannungen bekannt sein. In diesem Fall kann die Steuereinrichtung zunächst die ersten ausgangsseitigen Phasenspannungsanteile ermitteln und sodann die zweiten ausgangsseitigen Phasenspannungsanteile unter Berücksichtigung der Abstände der ersten ausgangsseitigen Phasenspannungsanteile von den Maximalwerten der ausgangsseitigen Phasenspannungen ermitteln. Noch besser ist es, wenn der Steuereinrichtung in der komplexen Ebene ein Spannungsgebiet bekannt ist, innerhalb dessen eine durch die ausgangsseitigen Phasenspannungen bestimmte komplexe ausgangsseitige Gesamtspannung liegen darf, und die Steuereinrichtung die zweiten ausgangsseitigen Phasenspannungsanteile unter Berücksichtigung des Abstands der komplexen ersten ausgangsseitigen Spannung von den Grenzen des Spannungsgebietes ermittelt. Zudem sind die Limitierungen oftmals zeitlich nicht konstant, sondern basieren sehr spezifisch auf dem momentanen Betriebszustand des Multilevelkonverters. Durch die Definition des vom jeweiligen Betriebszustand abhängigen Spannungsgebietes ist weiterhin eine Berücksichtigung des Umstands möglich, dass die Limitierungen sehr spezifisch auf der genauen Auslegung des Multilevelkonverters basieren.

Schließlich ist es auch möglich, dass die Steuereinrichtung die zweiten ausgangsseitigen Phasenspannungsanteile unter Berücksichtigung sowohl der ausgangsseitigen Phasenströme als auch der ersten ausgangsseitigen Phasenspannungsanteile ermittelt. Insbesondere können die vorstehend erläuterten Möglichkeiten zur Berücksichtigung nur der ausgangsseitigen Phasenströme und nur der ersten ausgangsseitigen Phasenspannungsanteile miteinander kombiniert werden. Auch kann eine gegenseitige Abhängigkeit bestehen.

Vorzugsweise sind der Steuereinrichtung Maximalwerte für die ausgangsseitigen Phasenspannungen bekannt. In diesem Fall kann die Steuereinrichtung die ersten ausgangsseitigen Phasenspannungsanteile unter Berücksichtigung der Maximalwerte ermitteln.

Noch besser ist es, wenn der Steuereinrichtung in der komplexen Ebene ein Spannungsgebiet bekannt ist, innerhalb dessen eine durch die ausgangsseitigen Phasenspannungen bestimmte komplexe ausgangsseitige Gesamtspannung liegen darf. In diesem Fall kann die Steuereinrichtung die ersten ausgangsseitigen Phasenspannungsanteile unter Berücksichtigung der Grenzen des Spannungsgebietes ermitteln. Zudem sind die Limitierungen oftmals zeitlich nicht konstant, sondern basieren sehr spezifisch auf dem momentanen Betriebszustand des Multilevelkonverters. Durch die Definition des vom jeweiligen Betriebszustand abhängigen Spannungsgebietes ist weiterhin eine Berücksichtigung des Umstands möglich, dass die Limitierungen sehr spezifisch auf der genauen Auslegung des Multilevelkonverters basieren.

Es ist weiterhin möglich, dass der Steuereinrichtung in der komplexen Ebene ein Flussgebiet bekannt ist, innerhalb dessen der komplexe magnetische Flusszeiger des Ofentransformators liegen darf. In diesem Fall kann die Steuereinrichtung die ersten und/oder die zweiten ausgangsseitigen Phasenspannungsanteile unter Berücksichtigung des Abstands des komplexen Flusszeigers von den Grenzen des Flussgebietes ermitteln. Der magnetische Flusszeiger kann von der Steuereinrichtung durch Integration des nach Abzug ohmscher und ggf. induktiver Spannungsverluste verbleibenden Raumzeigers für die Primär- bzw. Sekundärspannungen, gewichtet mit den jeweiligen Windungszahlen, ermittelt werden. Der Raumzeiger muss bestimmte Werte einhalten, weil anderenfalls Eisensättigung auftreten würde. Insbesondere darf der Betrag des magnetischen Flusszeigers nicht zu groß werden, weil anderenfalls im Ofentransformator Eisensättigung auftreten würde. Umgekehrt darf der Betrag des magnetischen Flusszeigers aber auch nicht zu klein werden, da dies zu einer zu großen Frequenz der ausgangsseitigen Phasenspannungen bzw. ausgangsseitigen Phasenströme führen würde.

Die genannten Gebiete für die komplexen Raumzeiger der ausgangsseitigen Spannungen, des ausgangsseitigen Stromes und des Flusses sind nicht notwendigerweise einfach zusammenhängend. Vielmehr ist es möglich, dass sie "Löcher" aufweisen, also verbotene Zonen, die in der komplexen Ebene vollständig von einem erlaubten Bereich umgeben sind. Auch ist es möglich, dass das zulässige Gebiet für einen der komplexen Raumzeiger als Fläche verschwindet, also beispielsweise in eine geschlossene Linie entartet. Insbesondere bei dem magnetischen Flusszeiger kann dies der Fall sein. Weiterhin ist es möglich, dass die genannten Gebiete zeitlich variieren. Dies kann beispielsweise geschehen, wenn sich Randbedingungen ändern oder neue Randbedingungen bekannt werden.

Es ist möglich, dass die Steuereinrichtung die ausgangsseitigen Phasenströme - also die im Rahmen des erfindungsgemäßen Steuerverfahrens verwerteten ausgangsseitigen Phasenströme - als Messwerte entgegennimmt. Alternativ ist es möglich, dass die Steuereinrichtung die ausgangsseitigen Phasenströme mittels eines Modells des Lichtbogenofens ermittelt. Entsprechende Modelle sind Fachleuten bekannt.

Auch im Falle einer modellgestützten Ermittlung der ausgangsseitigen Phasenströme ist es möglich, dass die Steuereinrichtung (zusätzlich) Messwerte für die ausgangsseitigen Phasenströme entgegennimmt. Im Rahmen der Ermittlung der ersten und gegebenenfalls auch der zweiten ausgangsseitigen Phasenspannungsanteile werden auch in diesem Fall die modellgestützt ermittelten ausgangsseitigen Phasenströme verwendet. Es ist jedoch möglich, dass die Steuereinrichtung das Modell des Lichtbogenofens anhand der Abweichung der mittels des Modells des Lichtbogenofens ermittelten ausgangsseitigen Phasenströme von den Messwerten adaptiert.

Vorzugsweise bestimmt die Steuereinrichtung die ersten ausgangsseitigen Phasenspannungsanteile derart, dass die Summe der Produkte der ersten ausgangsseitigen Phasenspannungsanteile und der ausgangsseitigen Phasenströme gleich einer der Steuereinrichtung bekannten ausgangsseitigen, nur für den jeweiligen Zyklus gültigen momentanen Sollleistung ist. Dadurch kann gezielt eine Leistungsregelung des Lichtbogenofens erfolgen.

Diese Vorgehensweise steht im Gegensatz zu den Vorgehensweisen des Standes der Technik, bei denen eine Regelung über mehrere Perioden der Netzfrequenz hinweg zu erfolgen scheint. Darauf deuten insbesondere die im Stand der Technik - auch in der EP 2 329 684 B1 - immer wieder verwendeten Begriffe "Wirkleistung" und "Blindleistung" hin. Die ausgangsseitige momentane Sollleistung kann der Steuereinrichtung als entsprechender Leistungsverlauf bekannt sein. Der Leistungsverlauf kann konstant sein, kann aber auch variieren. Im Falle eines Variierens sollte die ausgangsseitige momentane Sollleistung vorzugsweise nur langsam variieren.

In aller Regel bezieht der Multilevelkonverter aufgrund einer entsprechenden Ansteuerung durch die Steuereinrichtung aus eingangsseitigen Phasen eines Versorgungsnetzes eingangsseitige Phasenströme. Das Versorgungsnetz wird mit einer Netzfrequenz betrieben. Die Netzfrequenz liegt üblicherweise bei 50 Hz oder 60 Hz. Natürlich sind auch andere Netzfrequenzen möglich. Das Versorgungsnetz führt in der Regel eine Mittelspannung von 11 kV, 30 kV, 33 kV oder 110 kV.

Vorzugsweise ermittelt die Steuereinrichtung mit der Zykluszeit immer wieder die Ansteuerung des Multilevelkonverters derart, dass ein durch die eingangsseitigen Phasenströme bestimmter komplexer eingangsseitiger Strom in der komplexen Ebene unter einem vorbestimmten Phasenwinkel relativ zu einer durch die eingangsseitigen Phasenspannungen der eingangsseitigen Phasen des Versorgungsnetzes bestimmten komplexen eingangsseitigen Spannung orientiert ist, insbesondere parallel zu der komplexen eingangsseitigen Spannung orientiert ist. Dadurch wird dem Versorgungsnetz, betrachtet über eine ganze oder zumindest eine halbe Periode, zusätzlich zur Wirkleistung eine definierte Blindleistung entnommen bzw. - im Falle einer parallelen Orientierung - keine Blindleistung entnommen. Dadurch ist es möglich, aus dem Versorgungsnetz, jeweils betrachtet über ganze oder zumindest halbe Perioden, ausschließlich Wirkleistung zu beziehen oder für diese Zeiträume gezielt einen Bezug an Blindleistung aus dem Versorgungsnetz einzustellen. Der Bezug einer definierten Blindleistung kann beispielsweise sinnvoll sein, um die Blindleistung anderer an das Versorgungsnetz angeschlossener Verbraucher zu kompensieren. Über mehrere halbe Perioden gesehen kann aber auch der Bezug an Blindleistung gegebenenfalls zeitlich variieren, vorzugsweise langsam variieren.

Die Ansteuerung des Multilevelkonverters, so dass er eingangsseitig aus dem Versorgungsnetz vorgegebene Ströme (und in Verbindung mit den eingangsseitigen Phasenspannungen auch momentane Leistungen) bezieht, ist als solche ohne weiteres möglich. Die Möglichkeiten zur entsprechenden Ansteuerung sind dem Fachmann bekannt. Entscheidend ist vorliegend die Ermittlung der eingangsseitigen Phasenströme.

Vorzugsweise ermittelt die Steuereinrichtung mit der Zykluszeit immer wieder die Ansteuerung des Multilevelkonverters derart, dass der Multilevelkonverter aus den eingangsseitigen Phasen eingangsseitige momentane Leistungen entsprechend für den jeweiligen Zyklus gültiger Anteile für die eingangsseitigen Phasen bezieht. Wenn über mehrere Zyklen hinweg die Anteile für die eingangsseitigen Phasen entsprechend vorgegeben werden, erfolgt auch eine rein symmetrische Belastung des Versorgungsnetzes. In diesem Fall variieren die Anteile für die eingangsseitigen Phasen mit einem gleichbleibenden Phasenversatz, insbesondere ohne Phasenversatz, mit den eingangsseitigen Phasenspannungen.

In Verbindung mit einer sich nur zeitlich langsam ändernden Vorgabe der ausgangsseitigen momentanen Wirkleistung (und gegebenenfalls auch der eingangsseitigen Blindleistung) kann somit aus Sicht des Versorgungsnetzes ein nahezu völlig flickerfreier Betrieb des Lichtbogenofens erfolgen. Der Lichtbogenofen wird dadurch im Ergebnis zu einer gut handhabbaren - sozusagen "gezähmten" - Last. Dies gilt auch dann, wenn weder eingangsseitig noch ausgangsseitig des Multilevelkonverters aktive oder passive Kompensatoren angeordnet sind. Dies gilt weiterhin auch dann, wenn sich extreme Betriebszustände des Lichtbogenofens ergeben, beispielsweise einer der Lichtbögen kurzzeitig abreißt.

Vorzugsweise ist der Multilevelkonverter als Zwischenkreisumrichter ausgebildet, der zu einem Versorgungsnetz hin einen eingangsseitigen Gleichrichter und zum Ofentransformator hin einen ausgangsseitigen Wechselrichter aufweist, die über einen Gleichspannungskreis miteinander verbunden sind. In diesem Fall kann eine nahezu entkoppelte Ermittlung der Ansteuerung des Wechselrichters und des Gleichrichters erfolgen.

Die Aufgabe wird weiterhin durch ein Steuerprogramm mit den Merkmalen des Anspruchs 12 gelöst. Erfindungsgemäß bewirkt die Abarbeitung des Steuerprogramms durch die Steuereinrichtung, dass die Steuereinrichtung ein erfindungsgemäßes Steuerverfahren ausführt.

Die Aufgabe wird weiterhin durch eine Steuereinrichtung mit den Merkmalen des Anspruchs 13 gelöst. Erfindungsgemäß ist die Steuereinrichtung mit einem erfindungsgemäßen Steuerprogramm programmiert, so dass die Steuereinrichtung im Betrieb ein erfindungsgemäßes Steuerverfahren ausführt.

Die Aufgabe wird weiterhin durch einen Multilevelkonverter mit den Merkmalen des Anspruchs 14 gelöst. Erfindungsgemäß wird der Multilevelkonverter von einer erfindungsgemäßen Steuereinrichtung gesteuert.

Kurze Beschreibung der Zeichnungen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit den Zeichnungen näher erläutert wird. Dabei zeigen:

FIG 1     einen Lichtbogenofen und dessen Energieversorgung,
FIG 2     einen Arm eines Multilevelkonverters,
FIG 3     ein Submodul,
FIG 4     ein weiteres Submodul,
FIG 5     ein Ablaufdiagramm,
FIG 6     ein Zeitdiagramm,
FIG 7     ein Zeigerdiagramm für komplexe ausgangsseitige elektrische Größen,
FIG 8     ein Ablaufdiagramm,
FIG 9     eine komplexe Ebene für einen komplexen ausgangsseitigen Strom,

FIG 10    eine komplexe Ebene für eine komplexe erste ausgangsseitige Spannung,

FIG 11    ein Ablaufdiagramm,

FIG 12    ein Ablaufdiagramm,

FIG 13    ein Ablaufdiagramm,

FIG 14    ein Zeigerdiagramm für komplexe ausgangsseitige elektrische Größen und

FIG 15    einen Lichtbogenofen und dessen Energieversorgung.

Beschreibung der Ausführungsformen

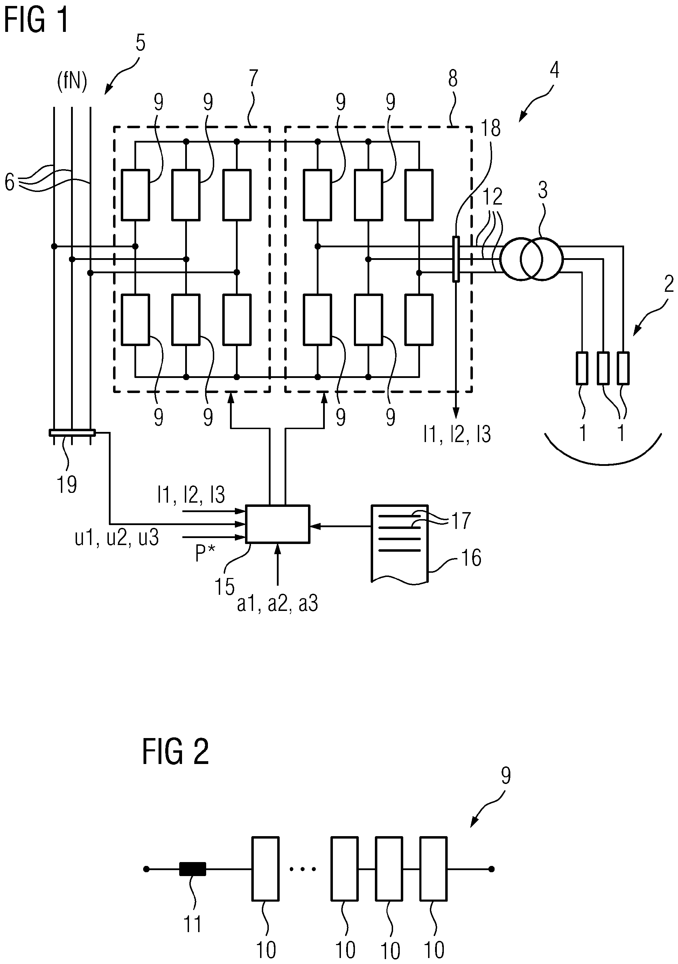

Gemäß FIG 1 werden Elektroden 1 eines Drehstrom-Lichtbogenofens 2 über einen Ofentransformator 3 von einem Multilevelkonverter 4 mit elektrischer Energie versorgt. Der Lichtbogenofen 2 kann von beliebiger Art sein. Es kann sich um einen Lichtbogenofen 2 im engeren Sinne (EAF = electric arc furnace) handeln. Es kann sich aber auch um einen sogenannten SAF (= submerged arc furnace) oder um einen SMELTER handeln. In dem Lichtbogenofen 2 kann nach Bedarf Eisen, Stahl, Aluminium oder auch ein anderes Metall geschmolzen werden.

Der Multilevelkonverter 4 wird seinerseits in aller Regel aus einem Versorgungsnetz 5 mit mehreren eingangsseitigen Phasen 6 (in der Regel drei Phasen 6) mit elektrischer Energie versorgt. Das Versorgungsnetz 5 kann beispielsweise ein Mittelspannungsnetz mit einer Nennspannung von 11 kV, 30 kV, 33 kV oder - in Einzelfällen - von 110 kV sein. Das Versorgungsnetz 5 wird mit einer Netzfrequenz fN betrieben. Die Netzfrequenz fN liegt in der Regel bei 50 Hz oder 60 Hz.

Der Multilevelkonverter 4 ist zwischen dem Versorgungsnetz 5 und dem Ofentransformator 3 angeordnet, der Ofentransformator 3 zwischen dem Multilevelkonverter 4 und den Elektroden 1. Die elektrische Energie fließt somit vom Versorgungsnetz 5 zum Multilevelkonverter 4, von dort weiter zum Ofentransformator 3 und von dort schließlich zu den Elektroden 1.

Konkret in der Ausgestaltung von FIG 1 ist der Multilevelkonverter 4 als Zwischenkreisumrichter ausgebildet, der zum Versorgungsnetz 5 hin einen eingangsseitigen Gleichrichter 7 und zum Ofentransformator 3 hin einen ausgangsseitigen Wechselrichter 8 aufweist. Der Gleichrichter 7 und der Wechselrichter 8 sind über einen Gleichspannungskreis miteinander verbunden.

Multilevelkonverter sind Fachleuten allgemein bekannt. Multilevelkonverter weisen - siehe auch FIG 2 - Arme 9 auf. Von den Armen 9 sind in FIG 1 exemplarisch nur einige wenige mit ihrem Bezugszeichen versehen.

Die Arme 9 bestehen gemäß FIG 2 ihrerseits aus einer mehrstufigen Reihenschaltung von Submodulen 10. In der Regel sind pro Arm 9 acht oder mehr derartiger Submodule 10 vorhanden. Die Submodule 10 sind untereinander gleich aufgebaut. In der Regel befindet sich am Ende der Reihenschaltung weiterhin eine Drossel 11. Die Drossel 11 befindet sich bei einem Arm 9 des Gleichrichters 7 meist an dem einer eingangsseitigen Phase 6 zugewandten Ende des jeweiligen Armes 9. In analoger Weise befindet sich die Drossel 11 bei einem Arm 9 des Wechselrichters 8 an dem einer ausgangsseitigen Phase 12 (siehe FIG 1) zugewandten Ende des jeweiligen Armes 9.

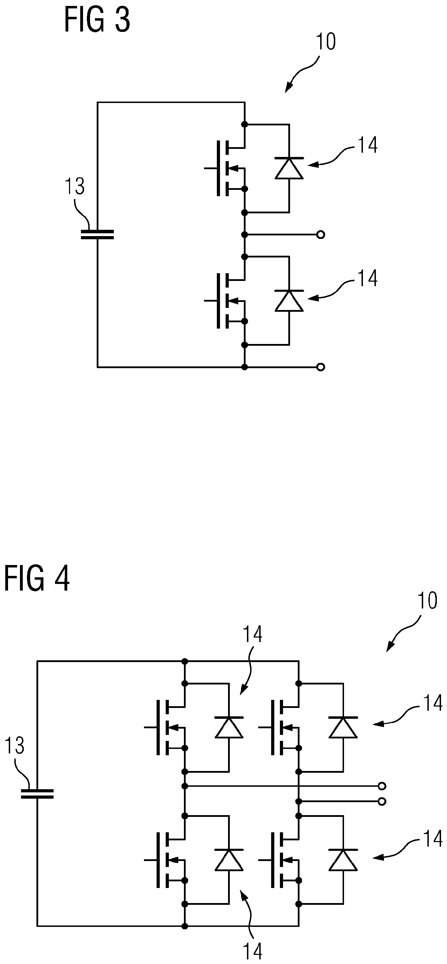

Gemäß FIG 3 umfasst jedes Submodul 10 einen Speicherkondensator 13 und selbstgeführte Halbleiterschalter 14. Der Begriff "selbstgeführt" bedeutet, dass die Halbleiterschalter 14 durch den Halbleiterschaltern 14 von außen zugeführte Steuersignale sowohl zuschaltbar als auch abschaltbar sind. Beispielsweise können die selbstgeführten Halbleiterschalter 14 als IGBTs ausgebildet sein. Der Begriff "selbstgeführt" steht im Gegensatz zum Begriff "netzgeführt". Dieser Begriff bedeutet, dass der jeweilige Halbleiterschalter zwar gezielt zugeschaltet werden kann, jedoch nicht durch ein externes Steuersignal abgeschaltet werden kann. Ein Beispiel für einen netzgeführten Halbleiterschalter ist ein "normaler" Thyristor.

Gemäß FIG 3 weisen die Submodule 10 jeweils einen einzigen Speicherkondensator 13 und genau zwei Halbleiterschalter 14 auf. Diese Konfiguration ist die Minimalkonfiguration der Submodule 10. Alternativ könnten die Submodule 10 gemäß der Darstellung von FIG 4 beispielsweise einen Speicherkondensator 13 und vier Halbleiterschalter 14 in Brückenschaltung aufweisen. Auch könnten die Submodule 10 mehrere einzeln schaltbare Speicherkondensatoren 13 aufweisen. In diesem Fall müssen pro eigenständig schaltbarem Speicherkondensator 13 mindestens zwei Halbleiterschalter 14 vorhanden sein.

Die Halbleiterschalter 14 jedes Submoduls 10 sind unabhängig von den Halbleiterschaltern 14 der anderen Submodule 10 schaltbar. Dies gilt unabhängig davon, ob die anderen Submodule 10 im selben oder in einem anderen Arm des Umrichters 6 angeordnet sind wie das betreffende Submodul 10. Je nach Schaltzustand der Halbleiterschalter 14 des jeweiligen Submoduls 10 ist der Speicherkondensator 13 des jeweiligen Submoduls 10 alternativ überbrückt oder aktiv. Wenn der in FIG 3 obere Halbleiterschalter 14 eines Submoduls 10 geschlossen ist und der andere Halbleiterschalter 14 geöffnet ist, ist der Speicherkondensator 13 des jeweiligen Submoduls 10 aktiv. Wenn umgekehrt der in FIG 3 obere Halbleiterschalter 14 geöffnet ist und der untere Halbleiterschalter 14 geschlossen ist, ist der Speicherkondensator 13 des jeweiligen Submoduls 10 überbrückt. Wenn der Speicherkondensator 13 aktiv ist, trägt die über dem Speicherkondensator 13 abfallende Spannung zur resultierenden Spannung des jeweiligen Armes 9 bei. Ein in dem jeweiligen Arm 9 fließender Strom bewirkt - je nach Richtung des in dem Arm 9 fließenden Stromes und je nach Ladungszustand des Speicherkondensators 13 - ein Laden oder ein Entladen des Speicherkondensators 13. Wenn der Speicherkondensator 13 hingegen überbrückt ist, trägt die über dem Speicherkondensator 13 abfallende Spannung nicht zur resultierenden Spannung des jeweiligen Armes 9 bei. Ein in dem jeweiligen Arm 9 fließender Strom bewirkt weder ein Laden noch ein Entladen des Speicherkondensators 13.

In analoger Weise ist auch der Speicherkondensator 13 des Submoduls 10 von FIG 4 je nach Ansteuerzustand der Halbleiterschalter 14 aktiv oder überbrückt. Im Falle der Ausgestaltung von FIG 4 existiert jedoch ein weiterer Schaltzustand, bei dem die über dem Speicherkondensator 13 abfallende Spannung mit inverser Polung zur resultierenden Spannung des jeweiligen Armes 9 beiträgt.

Der Multilevelkonverter 4 wird gemäß FIG 1 von einer Steuereinrichtung 15 gesteuert. Mittels der Steuereinrichtung 15 erfolgt insbesondere die Ansteuerung der Halbleiterschalter 14 der Submodule 10. Die Art und Weise, wie die Halbleiterschalter 14 der Submodule 10 angesteuert werden, ist Fachleuten bekannt.

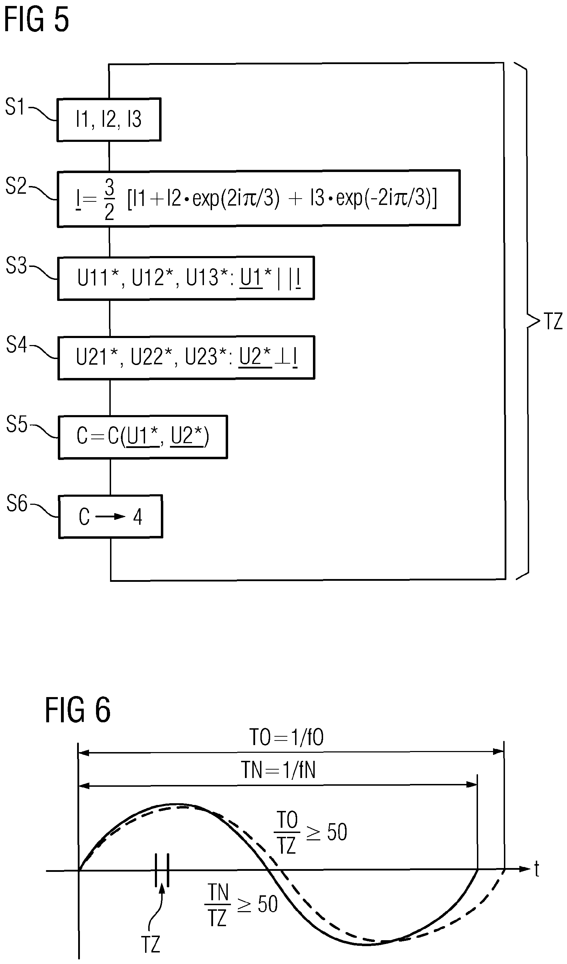

Die Steuereinrichtung 15 ist mit einem Steuerprogramm 16 programmiert. Das Steuerprogramm 16 umfasst Maschinencode 17, der von der Steuereinrichtung 15 unmittelbar abarbeitbar ist. Die Programmierung der Steuereinrichtung 15 mit dem Steuerprogramm 16 bzw. - im Ergebnis gleichbedeutend - die Abarbeitung des Maschinencodes 17 durch die Steuereinrichtung 15 bewirkt, dass die Steuereinrichtung 15 ein Steuerverfahren ausführt, das nachstehend in Verbindung mit FIG 5 näher erläutert wird.

Gemäß FIG 5 führt die Steuereinrichtung 15 zyklisch immer wieder Schritte S1 bis S6 aus. Die Ausführung erfolgt mit einer Zykluszeit TZ. Die Zykluszeit TZ ist entsprechend der Darstellung in FIG 6 sehr klein. In aller Regel liegt die Zykluszeit TZ unter 1 ms. Insbesondere ist die Zykluszeit TZ erheblich kleiner als eine Periodenzeit TN = 1/fN des Versorgungsnetzes 5. Konkret zeigt FIG 6 eine einzelne Periode einer der an den eingangsseitigen Phasen 6 anstehenden Spannungen, die zugehörige Periodenzeit TN und die Zykluszeit TZ.

Vorzugsweise gilt, dass der Kehrwert der Zykluszeit TZ mindestens zwanzigmal so groß wie die Netzfrequenz fN ist, vorzugsweise mindestens fünfzigmal so groß. Bei einer Netzfrequenz fN von 50 Hz liegt somit die Zykluszeit TZ vorzugsweise bei 1,0 ms oder darunter, beispielsweise bei 0,4 ms, 0,2 ms oder 0,1 ms. Konkret kann beispielsweise ein Regeltakt von 8 kHz oder 16 kHz realisiert werden, was mit einer Zykluszeit TZ von 125 µs bzw. 62,5 µs korrespondiert. Diese Festlegung der Zykluszeit TZ trägt dem Umstand Rechnung, dass für eine robuste und glatte Regelung mehrere Abtastungen benötigt werden, während derer sich ausgangsseitige Phasenströme I1, I2, I3, die der Multilevelkonverter 4 dem Ofentransformator 3 zuführt, nicht signifikant ändern.

Analoge Ausführungen gelten für das Verhältnis der Zykluszeit TZ zu einer Periodenzeit TO des Ofentransformators 3. Die Periodenzeit TO ist der Kehrwert der Frequenz fO, mit welcher der Ofentransformator 3 betrieben wird. Die Ofenfrequenz fO kann - rein zufällig - den gleichen Wert wie die Netzfrequenz fN aufweisen. In der Regel sind die beiden Frequenzen fO, fN aber voneinander verschieden.

Gemäß FIG 5 werden der Steuereinrichtung 15 im Schritt S1 ausgangsseitige Phasenströme I1 bis I3 bekannt. Beispielsweise kann die Steuereinrichtung 15 die ausgangsseitigen Phasenströme I1 bis I3 (genauer: die entsprechenden Messwerte) im Schritt S1 von einer Messeinrichtung 18 (siehe FIG 1) entgegennehmen. Die ausgangsseitigen Phasenströme I1 bis I3 sind diejenigen Ströme, die ausgangsseitig des Multilevelkonverters 4 fließen. In der Regel handelt es sich um die Ströme eingangsseitig des Ofentransformators 3. Falls es sich umgekehrt um die Ströme ausgangsseitig des Ofentransformators 3 handelt, kann anhand des Übersetzungsverhältnisses des Ofentransformators 3 ohne weiteres eine Umrechnung auf die Ströme eingangsseitig des Ofentransformators 3 erfolgen. Die Messwerte I1 bis I3 sind nur für den jeweiligen Zyklus gültig.

Genau genommen ist es ausreichend, wenn die Steuereinrichtung 15 zwei der drei ausgangsseitigen Phasenströme I1 bis I3 entgegennimmt, da stets und zu jedem Zeitpunkt die Beziehung

$$I1 + I2 + I3 = 0 \tag{1}$$

gelten muss. Anhand von zwei der ausgangsseitigen Phasenströme I1 bis I3 kann daher stets der verbleibende ausgangsseitige Phasenstrom I1 bis I3 ermittelt werden.

Im Schritt S2 ermittelt die Steuereinrichtung 15 anhand der Beziehung

$$\underline{I} = \frac{2}{3} \cdot [I1 + I2 \cdot \exp(2i\pi/3) + I3 \cdot \exp(-2i\pi/3)] \tag{2}$$

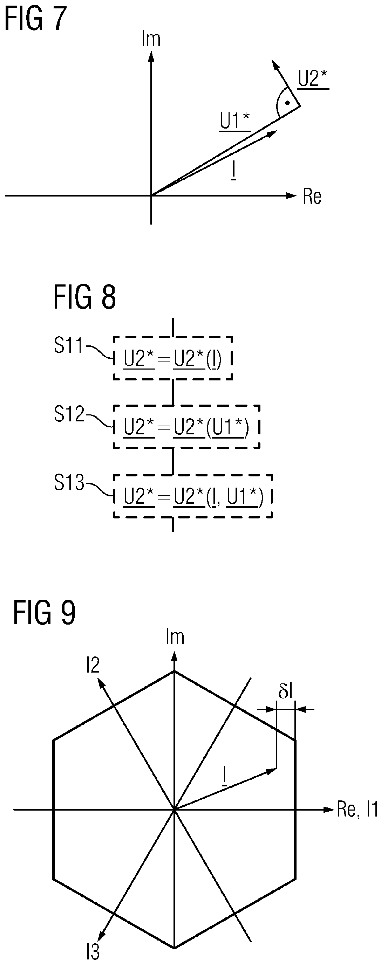

einen komplexen ausgangsseitigen Strom $\underline{I}$. FIG 7 zeigt die komplexe Ebene und in der komplexen Ebene den komplexen ausgangsseitigen Strom $\underline{I}$.

Im Schritt S3 ermittelt die Steuereinrichtung 15 erste ausgangsseitige Phasenspannungsanteile U11*, U12*, U13*. Die Ermittlung erfolgt derart, dass eine komplexe erste ausgangsseitige Spannung $\underline{U1^*}$, die gemäß der Beziehung

$$\underline{U1}^* = \frac{2}{3} \cdot [U11^* + U12^* \cdot \exp(2i\pi/3) + U13^* \cdot \exp(-2i\pi/3)] \tag{3}$$

durch die ersten ausgangsseitigen Phasenspannungsanteile U11*, U12*, U13* bestimmt ist, in der komplexen Ebene parallel zu dem komplexen ausgangsseitigen Strom I orientiert ist. FIG 7 zeigt auch die komplexe erste ausgangsseitige Spannung U1*. Die komplexe erste ausgangsseitige Spannung $\underline{U1}^*$ ist in FIG 7 unter einem sehr geringen Winkel zu dem komplexen ausgangsseitigen Strom $\underline{I}$ eingezeichnet. Der Winkel dient jedoch lediglich dazu, den komplexen ausgangsseitigen Strom $\underline{I}$ und die komplexe erste ausgangsseitige Spannung $\underline{U1}^*$ in FIG 7 besser voneinander unterscheiden zu können. Der Winkel dient also lediglich der besseren Darstellung. In der Realität ist der Winkel 0°.

Es ist möglich, dass die Steuereinrichtung 15 zuerst die ersten ausgangsseitigen Phasenspannungsanteile U11*, U12*, U13* ermittelt und dann die komplexe erste ausgangsseitige Spannung $\underline{U1}^*$ ermittelt. Einfacher ist es jedoch in der Regel, wenn die Steuereinrichtung 15 zuerst die komplexe erste ausgangsseitige Spannung U1* ermittelt und dann anhand der Beziehungen

$$U11^* = \mathrm{Re}[\underline{U1}^*], \tag{4}$$

$$U12^* = \mathrm{Re}[\underline{U1}^* \cdot \exp(-2i\pi/3)] \ \text{und} \tag{5}$$

$$U13^* = \mathrm{Re}[\underline{U1}^* \cdot \exp(2i\pi/3)]. \tag{6}$$

die ersten ausgangsseitigen Phasenspannungsanteile U11*, U12*, U13* ermittelt.

Weiterhin ermittelt die Steuereinrichtung 15 im Schritt S4 zweite ausgangsseitige Phasenspannungsanteile U21*, U22*, U23*. Die Ermittlung erfolgt derart, dass eine komplexe zweite ausgangsseitige Spannung $\underline{U2}^*$, die durch die zweiten ausgangsseitigen Phasenspannungsanteile U21*, U22*, U23* bestimmt ist, in der komplexen Ebene orthogonal zu dem komplexen ausgangsseitigen Strom I (und damit auch orthogonal zur komplexen ersten ausgangsseitigen Spannung $\underline{U1}^*$) orientiert ist. FIG 7 zeigt auch die komplexe zweite ausgangsseitige Spannung $\underline{U2}^*$.

Ebenso wie im Schritt S3 ist es möglich, dass die Steuereinrichtung 15 zuerst die zweiten ausgangsseitigen Phasenspannungsanteile U21*, U22*, U23* ermittelt und dann die komplexe zweite ausgangsseitige Spannung $\underline{U2}^*$ ermittelt. Einfacher ist es jedoch in der Regel, wenn die Steuereinrichtung 15 zuerst die komplexe zweite ausgangsseitige Spannung $\underline{U2}^*$ ermittelt und dann die zweiten ausgangsseitigen Phasenspannungsanteile U21*, U22*, U23* ermittelt. Die Umrechnungen sind völlig analog zu den Umrechnungen zwischen den ersten ausgangsseitigen Phasenspannungsanteilen U11*, U12*, U13* und der komplexen ersten ausgangsseitigen Spannung $\underline{U1}^*$.

Es ist natürlich auch möglich, dass die Steuereinrichtung 15 zuerst die beiden komplexen ausgangsseitigen Spannungen $\underline{U1}^*$, $\underline{U2}^*$ in der komplexen Ebene addiert und danach anhand dieser Summe die ausgangsseitigen Phasenspannungen ermittelt.

Im Schritt S5 ermittelt die Steuereinrichtung 15 eine Ansteuerung C für den Multilevelkonverter 4. Die Ermittlung des Schrittes S5 erfolgt basierend auf den Summen der jeweiligen ersten und zweiten ausgangsseitigen Phasenspannungsanteile U11* und U21* bzw. U12* und U22* bzw. U13* und U23*. Im Schritt S6 steuert die Steuereinrichtung 15 den Multilevelkonverter 4 entsprechend der im Schritt S5 ermittelten Ansteuerung C an. Somit wird im Ergebnis erreicht, dass der Multilevelkonverter 4 entsprechende ausgangsseitige Phasenspannungen bereitstellt. Es ist möglich, dass die Steuereinrichtung 15 die ersten ausgangsseitigen Phasenspannungsanteile U11*, U12*, U13* und die zweiten ausgangsseitigen Phasenspannungsanteile U21*, U22*, U23* unabhängig voneinander ermittelt. Es können jedoch auch Abhängigkeiten bestehen.

So ist es entsprechend der Darstellung in FIG 8 beispielsweise möglich, dass die Steuereinrichtung 15 die zweiten ausgangsseitigen Phasenspannungsanteile U21*, U22*, U23* unter Berücksichtigung der ausgangsseitigen Phasenströme I1, I2, I3 ermittelt. Dies ist in FIG 8 in einem Schritt S11 dargestellt. Alternativ ist es möglich, dass die Steuereinrichtung 15 die zweiten ausgangsseitigen Phasenspannungsanteile U21*, U22*, U23* unter Berücksichtigung der ersten ausgangsseitigen Phasenspannungsanteile U11*, U12*, U13* ermittelt. Dies ist in FIG 8 in einem Schritt S12 dargestellt. Weiterhin ist es möglich, dass die Steuereinrichtung 15 die zweiten ausgangsseitigen Phasenspannungsanteile U21*, U22*, U23* unter Berücksichtigung sowohl der ausgangsseitigen Phasenströme I1, I2, I3 als auch der ersten ausgangsseitigen Phasenspannungsanteile U11*, U12*, U13* ermittelt. Dies ist in FIG 8 in einem Schritt S13 dargestellt.

Die Schritte S11 bis S13 sind mögliche Ausgestaltungen des Schrittes S4 von FIG 5. Von den Schritten S11 bis S13 ist stets nur einer vorhanden. Die Schritte S11 bis S13 sind daher in FIG 8 nur gestrichelt dargestellt. Weiterhin sind die in den Schritten S11 bis S13 ergriffenen Maßnahmen in den Schritten S11 bis S13 bezüglich der komplexen ausgangsseitigen Ströme I und Spannungen $\underline{U1}^*$, $\underline{U2}^*$ dargestellt. Diese Vorgehensweise ist äquivalent zu den phasenweisen Vorgehensweisen.

Zur Berücksichtigung der ausgangsseitigen Phasenströme I1, I2, I3 können der Steuereinrichtung 15 beispielsweise Maximalwerte für die ausgangsseitigen Phasenströme I1, I2, I3 bekannt sein. Sind einfache, voneinander unabhängige Maximalwerte vorgegeben, so korrespondieren die Maximalwerte entsprechend der Darstellung in FIG 9 mit einem Sechseck. In diesem Fall kann die Steuereinrichtung 15 im Schritt S11 bzw. im Schritt S13 beispielsweise die Abstände der ausgangsseitigen Phasenströme I1, I2, I3 von ihren Maximalwerten ermitteln. Eingezeichnet ist der Abstand $\delta$I in FIG 9 rein beispielhaft für den ausgangsseitigen Phasenstrom I1. Die Abstände kann die Steuereinrichtung 15 sodann bei der Ermittlung der zweiten ausgangsseitigen Phasenspannungsanteile U21*, U22*, U23* berücksichtigen.

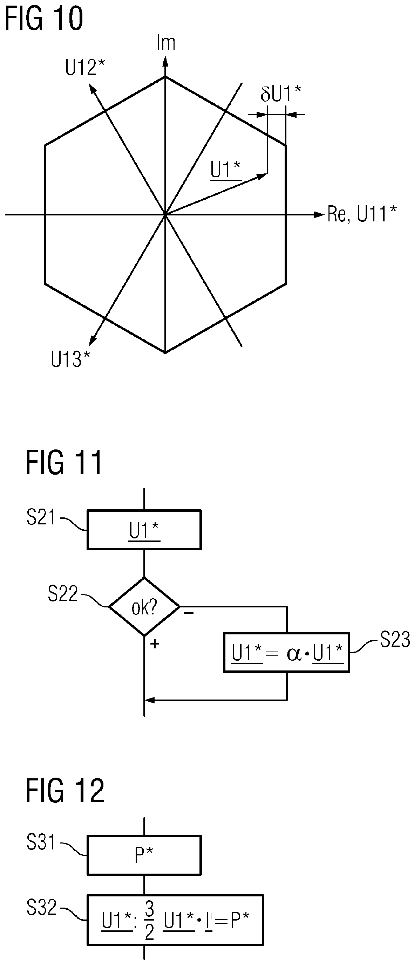

In analoger Weise können der Steuereinrichtung 15 zur Berücksichtigung der ersten ausgangsseitigen Phasenspannungsanteile U11*, U12*, U13* beispielsweise Maximalwerte für die ausgangsseitigen Phasenspannungen bekannt sein. Sind einfache, voneinander unabhängige Maximalwerte vorgegeben, so korrespondieren die Maximalwerte entsprechend der Darstellung in FIG 10 mit einem Sechseck. In diesem Fall kann die Steuereinrichtung 15 im Schritt S12 bzw. im Schritt S13 beispielsweise die Abstände der ersten ausgangsseitigen Phasenspannungsanteile U11*, U12*, U13* von den Maximalwerten für die ausgangsseitigen Phasenspannungen ermitteln. Eingezeichnet ist der Abstand $\delta$U* in FIG 10 rein beispielhaft für den ersten ausgangsseitigen Phasenspannungsanteil U11*. Die Abstände kann die Steuereinrichtung 15 sodann bei der Ermittlung der zweiten ausgangsseitigen Phasenspannungsanteile U21*, U22*, U23* berücksichtigen. Insbesondere kann die Steuereinrichtung 15 dann, wenn die Abstände Schwellenwerte unterschreiten, einen größeren jeweiligen zweiten ausgangsseitigen Phasenspannungsanteil U21*, U22*, U23* ermitteln als dann, wenn die Abstände die Schwellenwerte überschreiten.

Vorstehend wurde anhand der Darstellung in der jeweiligen komplexen Ebene für den komplexen ausgangsseitigen Strom I bzw. die komplexen erste ausgangsseitige Spannung U1* erläutert, wie die Berücksichtigung von Maximalwerten für die ausgangsseitigen Phasenströme I1, I2, I3 bzw. für die ausgangsseitigen Phasenspannungen erfolgen kann. Insbesondere wurde in FIG 9 das mit den Maximalwerten für die ausgangsseitigen Phasenströme I1, I2, I3 korrespondierende Stromgebiet dargestellt, innerhalb dessen der komplexe ausgangsseitige Strom I liegen darf. In analoger Weise wurde in FIG 10 das mit den Maximalwerten für die ausgangsseitigen Phasenspannungen korrespondierende Spannungsgebiet dargestellt, innerhalb dessen eine durch die ausgangsseitigen Phasenspannungen bestimmte komplexe ausgangsseitige Gesamtspannung liegen darf. Es ist auch möglich, dass der Steuereinrichtung 15 das Stromgebiet und/oder das Spannungsgebiet direkt in der jeweiligen komplexen Ebene bekannt sind. In diesem Fall kann die prinzipiell gleiche Vorgehensweise erfolgen, wobei jedoch nicht die Abstände der ausgangsseitigen Phasenströme I1, I2, I3 bzw. der ersten ausgangsseitigen Phasenspannungsanteile U11*, U12*, U13* von ihren Maximalwerten berücksichtigt werden, sondern der Abstand des komplexen ausgangsseitigen Stroms 1von den Grenzen des Stromgebietes bzw. der Abstand der komplexen ersten ausgangsseitigen Spannung U1* von den Grenzen des Spannungsgebietes. Diese Vorgehensweise ist insbesondere deshalb vorteilhaft, weil dann der Steuereinrichtung 15 auch zulässige Stromgebiete oder Spannungsgebiete vorgegeben werden können, die in der komplexen Ebene nicht einfach durch ein Sechseck definiert sind. Dadurch können beispielsweise gegenseitige Abhängigkeiten zwischen den ausgangsseitigen Phasen 12 berücksichtigt werden.

Die Berücksichtigung der Maximalwerte für die ausgangsseitigen Phasenspannungen kann weiterhin auch bei der Ermittlung der ersten ausgangsseitigen Phasenspannungsanteile U11*, U12*, U13* erfolgen. In analoger Weise kann auch die Berücksichtigung des Spannungsgebiets in der komplexen Ebene bei der Ermittlung der komplexen ersten ausgangsseitigen Spannung U1* erfolgen. Beispielsweise kann die Steuereinrichtung 15 entsprechend der Darstellung in FIG 11 zunächst in einem Schritt S21 gemäß einem vorgegebenen Kriterium die komplexe erste ausgangsseitige Spannung U1* ermitteln. Die Ermittlung des Schrittes S21 erfolgt noch ohne Berücksichtigung des Spannungsgebiets und ist daher nur vorläufig. In einem Schritt S22 kann die Steuereinrichtung 15 in diesem Fall prüfen, ob die im Schritt S21 ermittelte komplexe erste ausgangsseitige Spannung U1* innerhalb des Spannungsgebietes für die komplexe ausgangsseitige Gesamtspannung liegt. Ist dies nicht der Fall, so korrigiert die Steuereinrichtung 15 in einem Schritt S23 die im Schritt S21 ermittelte komplexe erste ausgangsseitige Spannung U1*. Beispielsweise kann eine Skalierung mit einem (reellen) Faktor $\alpha$ erfolgen, der zwischen 0 und 1 liegt. Der Faktor $\alpha$ wird in diesem Fall derart bestimmt, dass die im Schritt S23 ermittelte komplexe erste ausgangsseitige Spannung U1* innerhalb des Spannungsgebietes für die komplexe ausgangsseitige Gesamtspannung liegt. Erfolgt anstelle der Ermittlung in der komplexen Ebene eine phasenweise Ermittlung, ergeben sich äquivalente Ergebnisse. Die Schritte S21 bis S23 korrespondieren somit mit einer Ausgestaltung des Schrittes S3 von FIG 5.

Für die Ermittlung der komplexen ersten ausgangsseitigen Spannung U1* im Schritt S3 von FIG 5 bzw. im Schritt S21 von FIG 11 sind verschiedene Vorgehensweisen möglich. Derzeit ist bevorzugt, dass die Steuereinrichtung 15 die ersten ausgangsseitigen Phasenspannungsanteile U11*, U12*, U13* derart bestimmt, dass die Summe der Produkte der ersten ausgangsseitigen Phasenspannungsanteile U11*, U12*, U13* und der ausgangsseitigen Phasenströme I1, I2, I3 gleich einer der Steuereinrichtung 15 bekannten ausgangsseitigen momentanen Sollleistung P* ist. Dies wird nachstehend in Verbindung mit FIG 12 näher erläutert.

In ähnlicher Weise ist es auch möglich, dass der Steuereinrichtung 15 in der komplexen Ebene ein Flussgebiet bekannt ist, innerhalb dessen ein komplexer Flusszeiger des Ofentransformators 3 liegen darf. In diesem Fall kann die Steuereinrichtung 15 die ersten ausgangsseitigen Phasenspannungsanteile U11*, U12*, U13* und/oder die zweiten ausgangsseitigen Phasenspannungsanteile U21*, U22*, U23* unter Berücksichtigung des Abstands des komplexen Flusszeigers von den Grenzen des Flussgebietes ermitteln. Dies ist in den FIG nicht separat dargestellt.

Gemäß FIG 12 wird der Steuereinrichtung 15 in einem Schritt S31 die ausgangsseitige momentane Sollleistung P* bekannt. Die ausgangsseitige momentane Sollleistung P* ist nur für den aktuellen Zyklus gültig. Es ist möglich, dass der Steuereinrichtung 15 vorab für eine Vielzahl von Zyklen der zeitliche Verlauf für die ausgangsseitige momentane Sollleistung P* bekannt ist. Auch in diesem Fall ermittelt die Steuereinrichtung 15 jedoch anhand des ihr bekannten zeitlichen Verlaufs im Schritt S31 für den jeweiligen Zyklus den aktuellen Wert P*. Unabhängig davon, ob eine explizite Vorgabe der ausgangsseitigen momentanen Sollleistung P* für den jeweiligen Zyklus erfolgt oder ein entsprechender zeitlicher Verlauf vorgegeben ist, sollte sich die ausgangsseitige momentane Sollleistung P* in zeitlicher Hinsicht jedoch nicht oder nur langsam ändern.

In einem Schritt S32 ermittelt die Steuereinrichtung 15 für die ausgangsseitigen Phasen 12 die erste ausgangsseitigen Phasenspannungsanteile U11*, U12*, U13*. Die Ermittlung erfolgt nur für den jeweiligen Zyklus und damit nur für den jeweils aktuellen Zeitpunkt. Die Ermittlung des Schrittes S32 erfolgt derart, dass die Summe der Produkte der ersten ausgangsseitigen Phasenspannungsanteile U11*, U12*, U13* und der ausgangsseitige Phasenströme I1, I2, I3 gleich der ausgangsseitigen momentanen Sollleistung P* ist. Die Ermittlung des Schrittes S3 erfolgt also derart, dass die Beziehung

$$I1 \cdot U11* + I2 \cdot U12* + I3 \cdot U13* = P* \qquad (7)$$

gilt. Äquivalent zu einer Ermittlung gemäß Gleichung (7) ist, wie in FIG 12 dargestellt, auch eine direkte Ermittlung anhand der zugehörigen komplexen Werte $\underline{I}$, $\underline{U1*}$. Mit $\underline{I}'$ ist in FIG 12 der konjugiert komplexe Wert des komplexen ausgangs-seitigen Stromes $\underline{I}$ bezeichnet. Aufgrund des Umstands, dass gemäß dem Schritt S32 keine explizite Bildung des Realteils mehr erfolgt, ist gefordert, dass der Imaginärteil den Wert 0 aufweist. Dadurch ist zugleich auch gewährleistet, dass die erste komplexe ausgangsseitige Spannung $\underline{U1*}$ parallel zum komplexen ausgangsseitigen Strom $\underline{I}$ orientiert ist. Die ermittelte Leistung ändert sich auch nicht, wenn zusätzlich zur ersten komplexen ausgangsseitigen Spannung $\underline{U1*}$ die zweite komplexe ausgangsseitige Spannung $\underline{U2*}$ vorhanden ist. Denn die zweite komplexe ausgangsseitige Spannung $\underline{U2*}$ trägt aufgrund des Umstands, dass sie orthogonal zum komplexen ausgangsseitigen Strom $\underline{I}$ orientiert ist, nicht zur Leistung bei.

Mittels der Ansteuerung C des Multilevelkonverters 4 wird in der Regel auch der Bezug von eingangsseitigen Phasenströmen i1, i2, i3 festgelegt. Die eingangsseitigen Phasenspannungen u1, u2, u3 hingegen sind aufgrund des Betriebes des Versorgungsnetzes 5 vorgegeben. Sie können der Steuereinrichtung 15 beispielsweise aufgrund einer Erfassung mittels einer entsprechenden Messeinrichtung 19 (siehe FIG 1) bekannt sein.

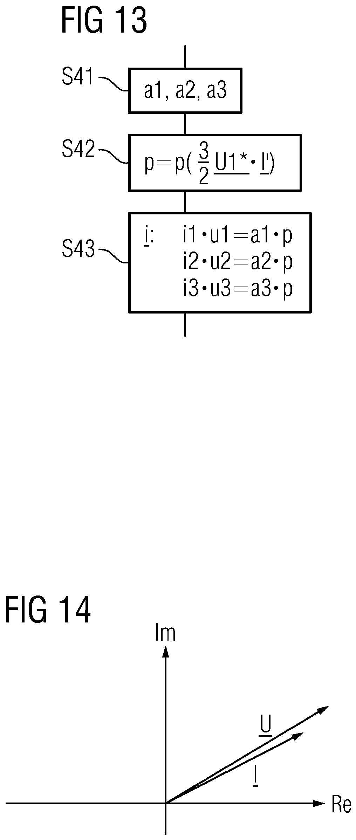

Zur (vollständigen) Ermittlung der Ansteuerung C des Multilevelkonverters 4 ist die Vorgehensweise von FIG 5 gemäß FIG 13 vorzugsweise durch zusätzliche Schritte S41 bis S43 ergänzt. Die Schritte S41 bis S43 werden ebenfalls in jedem Zyklus neu ausgeführt und in jedem Fall vor dem Schritt S5 ausgeführt. In der Regel werden sie nach den Schritten S1 bis S4 ausgeführt.

Im Schritt S41 werden der Steuereinrichtung 15 für die eingangsseitigen Phasen 6 Anteile a1, a2, a3 bekannt, zu denen eine aus dem Versorgungsnetz 5 momentan bezogene Leistung p, nachfolgend als eingangsseitige momentane Leistung p bezeichnet, auf die eingangsseitigen Phasen 6 verteilt werden soll. Auch die Anteile a1, a2, a3 sind nur für den aktuellen Zyklus gültig.

Analog zur ausgangsseitigen momentanen Sollleistung P* ist es möglich, dass der Steuereinrichtung 15 vorab für eine Vielzahl von Zyklen die zeitlichen Verläufe für die Anteile a1, a2, a3 bekannt sind. Auch in diesem Fall ermittelt die Steuereinrichtung 15 jedoch anhand der ihr bekannten zeitlichen Verläufe im Schritt S41 für den jeweiligen Zyklus die aktuellen Werte a1, a2, a3.

Für die eingangsseitige momentane Leistung p gilt, dass sie vom Ansatz her gleich der Leistung ist, die vom Multilevelkonverter 4 momentan dem Ofentransformator 3 zugeführt wird. Es müssen lediglich die innerhalb des Multilevelkonverters 4 auftretenden Verluste berücksichtigt werden. Wenn die ausgangsseitige momentane Sollleistung P* vorgegeben ist, kann die Steuereinrichtung 15 daher die eingangsseitige momentane Leistung p im Schritt S42 anhand der ausgangsseitigen momentanen Sollleistung P* ermitteln. Wenn die ausgangsseitige momentane Sollleistung P* nicht vorgegeben ist, kann die Steuereinrichtung 15 die eingangsseitige momentane Leistung p im Schritt S42 anhand der ermittelten komplexen ersten ausgangsseitigen Spannung $\underline{U1*}$ und des komplexen ausgangsseitigen Stromes $\underline{I}$ ermit-teln. Letzteres stellt den allgemeinen Fall dar und ist daher im Schritt S42 unter Verwendung der komplexen Größen angegeben. In beiden Fällen ist es ohne weiteres möglich, im Schritt S42 die eingangsseitige momentane Leistung p zu ermitteln.

Im Schritt S43 ermittelt die Steuereinrichtung 15 die eingangsseitigen Phasenströme i1, i2, i3. Die Ermittlung erfolgt derart, dass die Beziehungen

$$i1 \cdot u1 = a1 \cdot p, \qquad\qquad (8)$$

$$i2 \cdot u2 = a2 \cdot p \quad \text{und} \qquad\qquad (9)$$

$$i3 \cdot u3 = a3 \cdot p \qquad\qquad (10)$$

gelten.

Analog zur Vorgehensweise ausgangsseitig des Multilevelkonverters können auch die eingangsseitigen Phasenströme i1, i2, i3 und die eingangsseitigen Phasenspannungen u1, u2, u3 mittels der Beziehungen

$$\underline{i} = \frac{2}{3} \cdot [i1 + i2 \cdot \exp(2i\pi/3) + i3 \cdot \exp(-2i\pi/3)] \qquad\qquad (11)$$

und

$$\underline{u} = \frac{2}{3} \cdot [u1 + u2 \cdot \exp(2i\pi/3) + u3 \cdot \exp(-2i\pi/3)] \qquad\qquad (12)$$

in jeweilige komplexe Werte $\underline{i}$, $\underline{u}$ umgerechnet werden. Vorzugsweise sind die Anteile a1, a2, a3 derart bestimmt, dass der komplexe eingangsseitige Strom i entsprechend der Darstellung in FIG 14 in der komplexen Ebene parallel zu der komplexen eingangsseitigen Spannung $\underline{u}$ orientiert ist. Der in FIG 14 gegebene sehr geringe Winkel zwischen dem komplexen eingangsseitigen Strom $\underline{i}$ und der komplexen eingangsseitigen Spannung $\underline{u}$ dient - analog zu FIG 7 - lediglich dazu, den komplexen eingangsseitigen Strom $\underline{i}$ und die komplexe eingangsseitige Spannung $\underline{u}$ in FIG 14 besser voneinander unterscheiden zu können. Der Winkel dient also lediglich der besseren Darstellung. In der Realität ist der Winkel 0°.

Die parallele Orientierung des komplexen eingangsseitigen Stromes $\underline{i}$ und der komplexen eingangsseitigen Spannung $\underline{u}$ ergibt sich insbesondere dann, wenn die Anteile a1, a2 und a3 Verläufe aufweisen, die jeweils mit dem Quadrat eines sinusförmigen Verlaufs korrespondieren, wobei der jeweilige zeitliche Verlauf phasengleich zum korrespondierenden Spannungsverlauf der jeweiligen eingangsseitigen Phase 6 ist. Dadurch ergibt sich, betrachtet über jeweils ganze oder halbe Perioden, eine Belastung des Versorgungsnetzes 5 ausschließlich mit Wirkleistung. Unter der zusätzlichen Voraussetzung, dass die ausgangsseitige momentane Sollleistung P* sich in zeitlicher Hinsicht nicht oder nur langsam ändert, ergibt sich zusätzlich auch eine völlig flickerfreie Belastung des Versorgungsnetzes 5. Gegebenenfalls kann auch anhand vorbestimmter Kriterien ein konstanter oder zeitlich variierender Phasenwinkel zwischen dem komplexen eingangsseitigen Strom $\underline{i}$ und der komplexen eingangsseitigen Spannung $\underline{u}$ eingestellt werden. Dadurch kann, wieder betrachtet über ganze oder halbe Perioden, gezielt ein definierter Bezug an Blindleistung aus dem Versorgungsnetz 5 eingestellt werden.

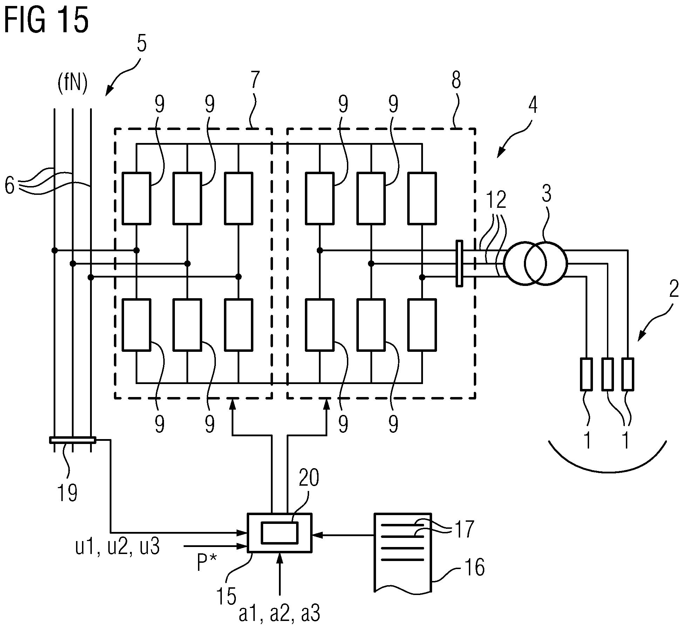

Vorstehend wurde in Verbindung mit den FIG 1 und 5 eine Vorgehensweise erläutert, bei welcher die Steuereinrichtung 15 die ausgangsseitigen Phasenströme I1, I2, I3 als Messwerte entgegennimmt. Alternativ ist es entsprechend der Darstellung in FIG 15 möglich, dass die Steuereinrichtung 15 die ausgangsseitigen Phasenströme I1, I2, I3 mittels eines Modells 20 des Lichtbogenofens 2 ermittelt. Entsprechende Modelle sind Fachleuten bekannt. Im Übrigen bleibt die Ausgestaltung von FIG 1 unverändert und kann auch die Vorgehensweise von FIG 5 unverändert beibehalten werden.

Die vorliegende Erfindung weist viele Vorteile auf. Insbesondere kann Flicker nahezu vollständig vermieden werden. Dies gilt sogar dann, wenn einer der Lichtbögen kurzzeitig abreißt. Auch kann die Energieversorgung des Lichtbogenofens 2 sehr flexibel eingestellt werden. Insbesondere können die Leistungsgrenzen des Ofentransformators 3 und des Multilevelumrichters 4 vollständig ausgenutzt werden.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Bezugszeichenliste

1                       Elektroden

| | |
|---|---|
| 2 | Lichtbogenofen |
| 3 | Ofentransformator |
| 4 | Multilevelkonverter |
| 5 | Versorgungsnetz |
| 6 | eingangsseitige Phasen |
| 7 | Gleichrichter |
| 8 | Wechselrichter |
| 9 | Arme |
| 10 | Submodule |
| 11 | Drosseln |
| 12 | ausgangsseitige Phasen |
| 13 | Speicherkondensatoren |
| 14 | Halbleiterschalter |
| 15 | Steuereinrichtung |
| 16 | Steuerprogramm |
| 17 | Maschinencode |
| 18, 19 | Messeinrichtungen |
| 20 | Modell des Lichtbogenofens |
| a1, a2, a3 | Anteile |
| C | Ansteuerung |
| fN | Netzfrequenz |
| $\underline{I}$, $\underline{i}$ | komplexe Ströme |
| $\underline{I}'$ | konjugiert komplexer Wert |
| I1, I2, I3 | ausgangsseitige Phasenströme |
| i1, i2, i3 | eingangsseitige Phasenströme |
| P* | ausgangsseitige momentane Sollleistung |
| p | eingangsseitige momentane Leistung |
| S1 bis S43 | Schritte |
| TN | Periodenzeit |
| TZ | Zykluszeit |
| $\underline{U1^*}$, $\underline{U2^*}$, $\underline{u}$ | komplexe Spannungen |
| U11*, U12*, U13* | erste ausgangsseitige Phasenspannungsanteile |
| U21*, U22*, U23* | zweite ausgangsseitige Phasenspannungsanteile |
| u1, u2, u3 | eingangsseitige Phasenspannungen |
| $\alpha$ | Faktor |
| $\delta I$, $\delta U1^*$ | Abstände |

**Patentansprüche**

1. Steuerverfahren für einen Multilevelkonverter (4), der Elektroden (1) eines Drehstrom-Lichtbogenofens (2) über einen Ofentransformator (3) mit elektrischer Energie versorgt, mit folgenden, mit einer Zykluszeit (TZ) immer wieder ausgeführten Schritten:

- einer Steuereinrichtung (15) des Multilevelkonverters (4) werden ausgangsseitig des Multilevelkonverters (4) fließende ausgangsseitige Phasenströme (I1, I2, I3) bekannt,
- die Steuereinrichtung (15) ermittelt für den jeweils aktuellen Zeitpunkt erste ausgangsseitige Phasenspannungsanteile (U11*, U12*, U13*), so dass eine durch die ersten ausgangsseitigen Phasenspannungsanteile (U11*, U12*, U13*) bestimmte komplexe erste ausgangsseitige Spannung ($\underline{U1^*}$) in der komplexen Ebene parallel zu einem durch die ausgangsseitigen Phasenströme (I1, I2, I3) bestimmten komplexen ausgangsseitigen Strom ($\underline{I}$) orientiert ist,
- die Steuereinrichtung (15) ermittelt zweite ausgangsseitige Phasenspannungsanteile (U21*, U22*, U23*), so dass eine durch die zweiten ausgangsseitigen Phasenspannungsanteile (U21*, U22*, U23*) bestimmte komplexe zweite ausgangsseitige Spannung ($\underline{U2^*}$) in der komplexen Ebene orthogonal zu der komplexen ersten ausgangsseitigen Spannung ($\underline{U1^*}$) orientiert ist,
- die Steuereinrichtung (15) steuert den Multilevelkonverter (4) derart an, dass der Multilevelkonverter (4) mit den Summen der ersten und zweiten ausgangsseitigen Phasenspannungsanteile (U11*, U12*, U13*, U21*, U22*, U23*) korrespondierende ausgangsseitige Phasenspannungen bereitstellt.

**2.** Steuerverfahren nach Anspruch 1,
**dadurch gekennzeichnet,**
**dass** die Steuereinrichtung (15) die zweiten ausgangsseitigen Phasenspannungsanteile (U21*, U22*, U23*) unter Berücksichtigung der ausgangsseitigen Phasenströme (I1, I2, I3) und/oder der ersten ausgangsseitigen Phasenspannungsanteile (U11*, U12*, U13*) ermittelt.

**3.** Steuerverfahren nach Anspruch 2,
**dadurch gekennzeichnet,**

- **dass** der Steuereinrichtung (15) Maximalwerte für die ausgangsseitigen Phasenströme (I1, I2, I3) bekannt sind und die Steuereinrichtung (15) die zweiten ausgangsseitigen Phasenspannungsanteile (U21*, U22*, U23*) unter Berücksichtigung der Abstände der ausgangsseitigen Phasenströme (I1, I2, I3) von ihren Maximalwerten ermittelt und/oder
- **dass** der Steuereinrichtung (15) Maximalwerte für die ausgangsseitigen Phasenspannungen bekannt sind und die Steuereinrichtung (15) die zweiten ausgangsseitigen Phasenspannungsanteile (U21*, U22*, U23*) unter Berücksichtigung der Abstände der ermittelten ersten ausgangsseitigen Phasenspannungsanteile (U11*, U12*, U13*) von den Maximalwerten der ausgangsseitigen Phasenspannungen ermittelt.

**4.** Steuerverfahren nach Anspruch 2,
**dadurch gekennzeichnet,**

- **dass** der Steuereinrichtung (15) in der komplexen Ebene ein Stromgebiet bekannt ist, innerhalb dessen der komplexe ausgangsseitige Strom (I) liegen darf, und die Steuereinrichtung (15) die zweiten ausgangsseitigen Phasenspannungsanteile (U21*, U22*, U23*) unter Berücksichtigung des Abstands des komplexen ausgangsseitigen Stroms (I) von den Grenzen des Stromgebietes ermittelt und/oder
- **dass** der Steuereinrichtung (15) in der komplexen Ebene ein Spannungsgebiet bekannt ist, innerhalb dessen eine durch die ausgangsseitigen Phasenspannungen bestimmte komplexe ausgangsseitige Gesamtspannung liegen darf, und die Steuereinrichtung (15) die zweiten ausgangsseitigen Phasenspannungsanteile (U21*, U22*, U23*) unter Berücksichtigung des Abstands der komplexen ersten ausgangsseitigen Spannung (U1*) von den Grenzen des Spannungsgebietes ermittelt.

**5.** Steuerverfahren nach einem der obigen Ansprüche,
**dadurch gekennzeichnet,**

- **dass** der Steuereinrichtung (15) Maximalwerte für die ausgangsseitigen Phasenspannungen bekannt sind und die Steuereinrichtung (15) die ersten ausgangsseitigen Phasenspannungsanteile (U11*, U12*, U13*) unter Berücksichtigung der Maximalwerte ermittelt und/oder
- **dass** der Steuereinrichtung (15) in der komplexen Ebene ein Spannungsgebiet bekannt ist, innerhalb dessen eine durch die ausgangsseitigen Phasenspannungen bestimmte komplexe ausgangsseitige Gesamtspannung liegen darf, und die Steuereinrichtung (15) die ersten ausgangsseitigen Phasenspannungsanteile (U11*, U12*, U13*) unter Berücksichtigung der Grenzen des Spannungsgebietes ermittelt.

**6.** Steuerverfahren nach einem der obigen Ansprüche,
**dadurch gekennzeichnet,**
**dass** der Steuereinrichtung (15) in der komplexen Ebene ein Flussgebiet bekannt ist, innerhalb dessen ein komplexer Flusszeiger des Ofentransformators (3) liegen darf, und die Steuereinrichtung (15) die ersten und/oder die zweiten ausgangsseitigen Phasenspannungsanteile (U11*, U12*, U13*, U21*, U22*, U23*) unter Berücksichtigung des Abstands des komplexen Flusszeigers von den Grenzen des Flussgebietes ermittelt.

**7.** Steuerverfahren nach einem der obigen Ansprüche,
**dadurch gekennzeichnet,**
**dass** die Steuereinrichtung (15) die ausgangsseitigen Phasenströme (I1, I2, I3) als Messwerte entgegennimmt oder dass die Steuereinrichtung (15) die ausgangsseitigen Phasenströme (I1, I2, I3) mittels eines Modells (20) des Lichtbogenofens (2) ermittelt.

**8.** Steuerverfahren nach einem der obigen Ansprüche,
**dadurch gekennzeichnet,**
**dass** die Steuereinrichtung (15) die ersten ausgangsseitigen Phasenspannungsanteile (U11*, U12*, U13*) derart bestimmt, dass die Summe der Produkte der ersten ausgangsseitigen Phasenspannungsanteile (U11*, U12*, U13*) und der ausgangsseitigen Phasenströme (I1, I2, I3) gleich einer der Steuereinrichtung (15) bekannten ausgangsseitigen momentanen Sollleistung (P*) ist.

**9.** Steuerverfahren nach einem der obigen Ansprüche,
**dadurch gekennzeichnet,**
**dass** der Multilevelkonverter (4) aufgrund einer entsprechenden Ansteuerung durch die Steuereinrichtung (15) aus eingangsseitigen Phasen (6) eines Versorgungsnetzes (5) eingangsseitige Phasenströme (i1, i2, i3) bezieht und dass die Steuereinrichtung (15) die Ansteuerung des Multilevelkonverters (4) mit der Zykluszeit (TZ) immer wieder derart ermittelt, dass ein durch die eingangsseitigen Phasenströme (i1, i2, i3) bestimmter komplexer eingangsseitiger Strom (i) in der komplexen Ebene unter einem vorbestimmten Phasenwinkel relativ zu einer durch die eingangsseitigen Phasenspannungen (u1, u2, u3) der eingangsseitigen Phasen (6) des Versorgungsnetzes (5) bestimmten komplexen eingangsseitigen Spannung (u) orientiert ist, insbesondere parallel zu der komplexen eingangsseitigen Spannung (u) orientiert ist.

**10.** Steuerverfahren nach einem der obigen Ansprüche,
**dadurch gekennzeichnet,**
**dass** der Multilevelkonverter (4) aufgrund einer entsprechenden Ansteuerung durch die Steuereinrichtung (15) aus eingangsseitigen Phasen (6) eines Versorgungsnetzes (5) eingangsseitige Phasenströme (i1, i2, i3) bezieht und dass die Steuereinrichtung (15) mit der Zykluszeit (TZ) immer wieder die Ansteuerung des Multilevelkonverters (4) derart ermittelt, dass der Multilevelkonverter (4) aus den eingangsseitigen Phasen (6) eingangsseitige momentane Leistungen entsprechend für den jeweiligen Zyklus gültiger Anteile (a1, a2, a3) für die eingangsseitigen Phasen (6) bezieht.

**11.** Steuerverfahren nach einem der obigen Ansprüche,
**dadurch gekennzeichnet,**
**dass** der Multilevelkonverter (4) als Zwischenkreisumrichter ausgebildet ist, der zu einem Versorgungsnetz (5) hin einen eingangsseitigen Gleichrichter (7) und zum Ofentransformator (3) hin einen ausgangsseitigen Wechselrichter (8) aufweist, die über einen Gleichspannungskreis miteinander verbunden sind.

**12.** Steuerprogramm für eine Steuereinrichtung (15) zum Steuern eines Multilevelkonverters (4), der Elektroden (1) eines Drehstrom-Lichtbogenofens (2) über einen Ofentransformator (3) mit elektrischer Energie versorgt, wobei das Steuerprogramm Maschinencode (17) umfasst, der von der Steuereinrichtung (15) unmittelbar abarbeitbar ist, wobei die Abarbeitung des Maschinencodes (17) durch die Steuereinrichtung (15) bewirkt, dass die Steuereinrichtung (15) ein Steuerverfahren nach einem der obigen Ansprüche ausführt.

**13.** Steuereinrichtung zum Steuern eines Multilevelkonverters (4), der Elektroden (1) eines Drehstrom-Lichtbogenofens (2) über einen Ofentransformator (3) mit elektrischer Energie versorgt, wobei die Steuereinrichtung mit einem Steuerprogramm (16) nach Anspruch 12 programmiert ist, so dass die Steuereinrichtung im Betrieb ein Steuerverfahren nach einem der Ansprüche 1 bis 11 ausführt.

**14.** Multilevelkonverter, der Elektroden (1) eines Drehstrom-Lichtbogenofens (2) über einen Ofentransformator (3) mit elektrischer Energie versorgt, wobei der Multilevelkonverter von einer Steuereinrichtung (15) nach Anspruch 13 gesteuert wird.

FIG 1

FIG 2

FIG 3

FIG 4

## FIG 5

S1 — I1, I2, I3

S2 — $\underline{I} = \dfrac{3}{2}\ [I1 + I2 \cdot \exp(2i\pi/3) + I3 \cdot \exp(-2i\pi/3)]$

S3 — U11*, U12*, U13*: $\underline{U1^*} \parallel \underline{I}$

S4 — U21*, U22*, U23*: $\underline{U2^*} \perp \underline{I}$

S5 — $C = C(\underline{U1^*}, \underline{U2^*})$

S6 — $C \longrightarrow 4$

TZ

## FIG 6

$T0 = 1/f0$

$TN = 1/fN$

$\dfrac{T0}{TZ} \geq 50$

$\dfrac{TN}{TZ} \geq 50$

TZ

t

FIG 7

FIG 8

$$S11 \quad \underline{U2}^* = \underline{U2}^*(\underline{I})$$

$$S12 \quad \underline{U2}^* = \underline{U2}^*(\underline{U1}^*)$$

$$S13 \quad \underline{U2}^* = \underline{U2}^*(\underline{I}, \underline{U1}^*)$$

FIG 9

## FIG 10

## FIG 11

## FIG 12

# FIG 13

$$S41 \quad \boxed{a1, a2, a3}$$

$$S42 \quad \boxed{p = p\left(\frac{3}{2}\,\underline{U1}^{*} \cdot \underline{I}'\right)}$$

$$S43 \quad \boxed{\begin{array}{l} \underline{i}: \quad i1 \cdot u1 = a1 \cdot p \\ \phantom{\underline{i}:} \quad i2 \cdot u2 = a2 \cdot p \\ \phantom{\underline{i}:} \quad i3 \cdot u3 = a3 \cdot p \end{array}}$$

# FIG 14

FIG 15

(fN)

5

7

8

4

9 9 9 9 12 3

6

2

19

20

u1, u2, u3

P*

15

a1, a2, a3

17

16

Europäisches
Patentamt

European
Patent Office

Office européen
des brevets

# EUROPÄISCHER RECHERCHENBERICHT

**Nummer der Anmeldung**

EP 23 21 8588

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | EP 2 947 766 A1 (SIEMENS AG [DE]) 25. November 2015 (2015-11-25) * Absätze [0018], [0047], [0054] - [0056], [0059], [0064]; Abbildungen 1,3, 5-8 * ----- | 1-14 | INV. H02M7/483 H02M1/42 H02M1/00 H02M1/32 H05B7/148 F27B3/08 |
| Y | EP 3 124 903 A1 (DANIELI AUTOMATION SPA [IT]) 1. Februar 2017 (2017-02-01) * Absätze [0041], [0047], [0057]; Abbildung 1 * ----- | 1 | |
| Y | FR 2 926 182 A1 (TOULOUSE INST NAT POLYTECH [FR]) 10. Juli 2009 (2009-07-10) * Seite 24, Zeilen 1-3; Abbildung 2 * * Seite 26, Zeilen 9-25 * ----- | 1 | |
| Y | CN 110 957 903 A (MCC CAPITAL ENG & RES INC LTD; CERISTAR ELECTRIC CO LTD) 3. April 2020 (2020-04-03) * Zusammenfassung; Abbildungen 4-6 * ----- | 1 | **RECHERCHIERTE SACHGEBIETE (IPC)** |
| Y | US 2022/115888 A1 (TSURUMA YOSHINORI [JP]) 14. April 2022 (2022-04-14) * Absätze [0041], [0058], [0064], [0070]; Abbildungen 1,8-17 * ----- | 1-5,7-14 | H02M H05B F27D F27B |
| Y | CN 116 667 407 A (NANTONG GUOXUAN NEW ENERGY TECH CO LTD) 29. August 2023 (2023-08-29) * Zusammenfassung; Abbildungen 6,13,14 * ----- | 1-5,7-14 | |
| Y | CN 116 316 925 A (UNIV SOUTHEAST) 23. Juni 2023 (2023-06-23) * Zusammenfassung; Abbildung 3 * ----- | 1-5,7-14 | |

-/--

Der vorliegende Recherchenbericht wurde für alle Patentansprüche erstellt

| Recherchenort | Abschlußdatum der Recherche | Prüfer |
|---|---|---|
| Den Haag | 29. Mai 2024 | Kanelis, Konstantin |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.................................................................
& : Mitglied der gleichen Patentfamilie, übereinstimmendes Dokument

EPO FORM 1503 03.82 (P04C03)

Europäisches
Patentamt

European
Patent Office

Office européen
des brevets

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | CHEN G ET AL: "Analysis and design optimization of front-end passive components for voltage source inverters", EIGHTEENTH ANNUAL IEEE APPLIED POWER ELECTRONICS CONFERENCE AND EXPOSITION, 2003. APEC '03; [ANNUAL APPLIED POWER ELECTRONICS CONFERENCE], NEW YORK, NY : IEEE, US, 9. Februar 2003 (2003-02-09), Seite 1170, XP032156048, DOI: 10.1109/APEC.2003.1179364 ISBN: 978-0-7803-7768-4 * Abschnitt II. ANALYSES OF HARMONICS AND INRUSH CURRENT; Abbildung 1 *<br><br>- - - - - | 6 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| Den Haag | 29. Mai 2024 | Kanelis, Konstantin |

EPO FORM 1503 03.82 (P04C03)

# EP 4 576 547 A1

## ANHANG ZUM EUROPÄISCHEN RECHERCHENBERICHT
## ÜBER DIE EUROPÄISCHE PATENTANMELDUNG NR.

EP 23 21 8588

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-05-2024

| Im Recherchenbericht angeführtes Patentdokument | Datum der Veröffentlichung | Mitglied(er) der Patentfamilie | Datum der Veröffentlichung |
|---|---|---|---|
| EP 2947766 A1 | 25-11-2015 | CN 106464146 A | 22-02-2017 |
| | | EP 2947766 A1 | 25-11-2015 |
| | | EP 3120451 A1 | 25-01-2017 |
| | | US 2017208654 A1 | 20-07-2017 |
| | | WO 2015176899 A1 | 26-11-2015 |
| EP 3124903 A1 | 01-02-2017 | AR 101962 A1 | 25-01-2017 |
| | | AU 2015227470 A1 | 16-02-2017 |
| | | BR 102015023945 A2 | 03-04-2018 |
| | | CA 2904967 A1 | 30-01-2017 |
| | | CN 106413167 A | 15-02-2017 |
| | | CN 113639564 A | 12-11-2021 |
| | | CN 114963781 A | 30-08-2022 |
| | | CN 114980397 A | 30-08-2022 |
| | | CY 1121620 T1 | 31-07-2020 |
| | | DK 3124903 T3 | 13-05-2019 |
| | | DK 3518622 T3 | 22-03-2021 |
| | | EP 3124903 A1 | 01-02-2017 |
| | | EP 3518622 A1 | 31-07-2019 |
| | | ES 2725911 T3 | 30-09-2019 |
| | | ES 2859698 T3 | 04-10-2021 |
| | | HR P20190858 T1 | 28-06-2019 |
| | | HR P20210416 T1 | 30-04-2021 |
| | | HU E043306 T2 | 28-08-2019 |
| | | HU E054041 T2 | 30-08-2021 |
| | | JP 6002823 B1 | 05-10-2016 |
| | | JP 2017033911 A | 09-02-2017 |
| | | KR 20170015045 A | 08-02-2017 |
| | | LT 3124903 T | 27-05-2019 |
| | | MA 40740 A | 01-02-2017 |
| | | MA 47024 A | 31-07-2019 |
| | | MX 354920 B | 26-03-2018 |
| | | MY 175365 A | 23-06-2020 |
| | | PL 3124903 T3 | 30-08-2019 |
| | | PL 3518622 T3 | 31-05-2021 |
| | | RU 2015139523 A | 22-03-2017 |
| | | SG 10201507755V A | 27-02-2017 |
| | | SI 3124903 T1 | 28-06-2019 |
| | | SI 3518622 T1 | 30-04-2021 |
| | | TR 201906577 T4 | 21-05-2019 |
| | | TW 201704707 A | 01-02-2017 |
| | | US 2017034878 A1 | 02-02-2017 |
| | | US 2019191502 A1 | 20-06-2019 |
| | | ZA 201506895 B | 29-03-2017 |
| FR 2926182 A1 | 10-07-2009 | FR 2926182 A1 | 10-07-2009 |

EPO FORM P0461

Für nähere Einzelheiten zu diesem Anhang : siehe Amtsblatt des Europäischen Patentamts, Nr.12/82

Seite 1 von 2

**ANHANG ZUM EUROPÄISCHEN RECHERCHENBERICHT
ÜBER DIE EUROPÄISCHE PATENTANMELDUNG NR.**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-05-2024

| Im Recherchenbericht angeführtes Patentdokument | Datum der Veröffentlichung | Mitglied(er) der Patentfamilie | Datum der Veröffentlichung |
|---|---|---|---|
| | | WO 2009087176 A1 | 16-07-2009 |
| CN 110957903 A | 03-04-2020 | KEINE | |
| US 2022115888 A1 | 14-04-2022 | CN 112385112 A | 19-02-2021 |
| | | EP 3979459 A1 | 06-04-2022 |
| | | JP 6763491 B1 | 30-09-2020 |
| | | JP WO2020240742 A1 | 13-09-2021 |
| | | US 2022115888 A1 | 14-04-2022 |
| | | WO 2020240742 A1 | 03-12-2020 |
| CN 116667407 A | 29-08-2023 | KEINE | |
| CN 116316925 A | 23-06-2023 | KEINE | |

Für nähere Einzelheiten zu diesem Anhang : siehe Amtsblatt des Europäischen Patentamts, Nr.12/82

Seite 2 von 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2329684 B1